# DEMANDE DE BREVET EUROPEEN

(11) **EP 0 994 584 A1**
(43) Date de publication de la demande: **19.04.2000**
(21) Numéro de dépôt: 99402419.8
(22) Date de dépôt: 04.10.1999
(51) Int. Cl.: H04B 10/17

(54) **Répéteur pour système de transmission à fibre optique de longue portée à multiplexage en longueur d'onde**

(30) Priorité: 15.10.1998 FR 9812934
(71) Demandeur: ALCATEL, 75008 Paris (FR)
(72) Inventeur: Gautheron, Olivier, 78180 Montigny Le Bretonneux (FR); Letellier, Vincent, 75013 Paris (FR)
(74) Mandataire: Lamoureux, Bernard

(57) **Abrégé**

L'invention propose, dans un système de transmission à fibre optique de longue portée à multiplexage en longueur d'onde, de régénérer séparément les signaux de chacune des longueurs d'onde du multiplex.

A cette fin, elle propose un répéteur comprenant:
- des moyens (4, 5) de séparation des signaux à une longueur d'onde (λ₁) du multiplex des signaux aux autres longueurs d'ondes;
- des moyens (7) de régénération des signaux à ladite longueur d'onde (λ₁), et
- des moyens (5, 6) de combinaison des signaux régénérés à ladite longueur d'onde et des signaux non régénérés aux autres longueurs d'onde.

L'invention permet de diminuer le nombre d'amplificateurs dans le système, pour une valeur donnée du rapport signal à bruit.

## Description

La présente invention concerne le domaine des transmissions par fibre optiques à multiplexage en longueur d'onde (dans la suite "WDM", acronyme de l'anglais "Wavelength Division Multiplexing"). Elle concerne plus précisément les systèmes de transmissions à fibre optique de longue portée en WDM utilisant des signaux non-solitons. On appelle système de longue portée les systèmes de transmission présentant une longueur typiquement supérieure à 1000 km.

La transmission d'impulsions RZ (retour à zéro) ou NRZ (non retour à zéro) est actuellement couramment utilisé dans des systèmes de transmission à fibre optique de longue portée. Un des problèmes pour de tels systèmes est celui de l'augmentation du rapport signal à bruit avec le nombre de répéteurs disposés dans le système.

Par répéteur, on entend ici, selon la terminologie classique, un module comprenant au moins l'une des fonctions suivantes appliquées aux impulsions optiques formant les signaux optiques transmis : recalage temporel ("retiming" en terminologie anglosaxonne), remise en forme ("reshaping"), amplification (reamplifying"). Un répéteur n'assurant que cette dernière fonction est dénommé amplificateur. On parle de régénérateur pour un répéteur assurant au moins l'une des deux premières fonctions.

Dans le cas de transmission de signaux solitons, une solution au problème de l'augmentation du rapport signal à bruit a été proposée. Les impulsions solitons ou solitons sont des impulsions RZ de largeur temporelle (FWHM, largeur d'impulsions à la moitié de la puissance maximale) faible par rapport au temps bit, qui présentent une relation déterminée entre la puissance, la largeur spectrale et la largeur temporelle, et qui se propagent généralement dans la partie à dispersion dite anormale d'une fibre optique. L'évolution de l'enveloppe d'une telle impulsion soliton dans une fibre monomode peut être modélisée par l'équation de Schrödinger non linéaire; la propagation repose sur un équilibre entre la dispersion anormale de la fibre et sa non-linéarité. Dans des systèmes de transmission à signaux solitons, le bruit d'émission spontanée des amplificateurs dégrade le rapport signal à bruit. Pour réduire le bruit d'émission spontanée des amplificateurs, et donc augmenter le rapport signal à bruit, il a été proposé d'utiliser des systèmes de filtres guidants glissants, voir par exemple EP-A-0 576 208. Cette solution repose sur la nature particulière des solitons, et leur capacité d'auto-régénération. Elle ne s'applique pas à des systèmes de transmission utilisant des signaux non solitons.

Il a aussi été proposé de procéder à la modulation synchrone des signaux solitons. On peut pour cela utiliser des modulateurs optiques de différents types, et notamment des modulateurs synchrones d'amplitude ou de phase utilisant l'effet Kerr. On trouvera dans H. Kubota et M. Nakazawa, Soliton Transmission Control in Time and Frequency Domains, IEEE Journal of Quantum Electronics, vol. 29 n° 3, 2189 ou dans N. J. Smith et N. J. Doran, Evaluating the Capacity of Phase Modulator-Controlled Long-Haul Soliton Transmission, Optical Fibers Technology I, 218-235 (1995) une revue des diverses techniques de contrôle ou de régénération des signaux solitons. Ces techniques ne sont pas limitées par la bande passante de composants électroniques. Toutefois, elles ne sont pas directement applicables à des impulsions RZ non-solitons, du fait de la différence des impulsions ou de leurs spectres par rapport à des signaux solitons.

Il est aussi connu, pour des systèmes de transmission monocanal, de procéder à la régénération électronique des signaux optiques, en prévoyant respectivement avant et après le régénérateur électronique un convertisseur opto-électronique et un convertisseur électro-optique. Cette solution est difficilement adaptable à une transmission en WDM, pour laquelle il faudrait démultiplexer les signaux et introduire dans le répéteur autant de régénérateurs que de canaux ; ceci conduirait à un répéteur d'une complexité et d'un volume dirimants.

La présente invention propose une solution originale et simple au problème de l'augmentation du rapport signal à bruit dans les systèmes de transmission à fibre optique à signaux non-solitons en WDM. On entend par signaux optiques non solitons, des signaux présentant une ou plusieurs des caractéristiques suivantes: largeur temporelle (FWHM) importante par rapport au temps bit, i.e. supérieures à environ 30à 40% de celui-ci; absence de relation déterminée entre la puissance, la largeur spectrale et la largeur temporelle; propagation généralement ou en moyenne dans la partie à dispersion normale ou à dispersion nulle d'une fibre optique; pas d'équilibre entre la dispersion et la non-linéarité au cours de la propagation.

L'invention permet de limiter l'augmentation du rapport signal à bruit, et donc d'augmenter la portée des liaisons, ou de faire diminuer le nombre d'amplificateurs.

Plus précisément, l'invention propose un répéteur pour un système de transmission à fibre optique à multiplexage en longueur d'onde, comprenant:
- des moyens de séparation des signaux à une longueur d'onde λ₁ du multiplex des signaux aux autres longueurs d'ondes;
- des moyens de régénération des signaux à la longueur d'onde λ₁, et
- des moyens de combinaison des signaux régénérés à ladite longueur d'onde et des signaux non régénérés aux autres longueurs d'onde.

Dans un mode de réalisation, les moyens de séparation comprennent un circulateur et un filtre réfléchissant les signaux à la dite longueur d'onde.

Dans ce cas, le circulateur présente de préférence une première entrée recevant les signaux appliqués au répéteur, une deuxième entrée reliée au filtre, et une troisième entrée reliée aux moyens de régénération (7).

Dans un mode de réalisation, les moyens de combinaison comprennent un circulateur et un filtre réfléchissant les signaux à la dite longueur d'onde.

Avantageusement, le circulateur présente dans ce cas une première entrée reliée au filtre, une deuxième entrée fournissant les signaux de sortie du répéteur, et une troisième entrée reliée aux moyens de régénération.

Dans un mode de réalisation, le filtre est un filtre de Bragg.

Avantageusement, le circulateur des moyens de séparation et le circulateur des moyens de combinaison sont respectivement reliés à des bornes distinctes du filtre.

L'invention propose aussi un système de transmission à fibre optique à multiplexage en longueur d'onde, comprenant au moins un tel répéteur.

Avantageusement, le système comprend un répéteur pour la régénération séparée des signaux à chacune des longueurs d'onde du multiplex.

Dans ce cas, les répéteurs sont de préférence régulièrement espacés entre eux.

D'autres caractéristiques et avantages de l'invention apparaîtront à la lecture de la description qui suit de modes de réalisation de l'invention, donnée à titre d'exemple et en référence aux dessins annexés, sur lesquels :
- la figure 1 montre une représentation schématique d'un répéteur selon l'invention, et
- la figure 2 montre un système de transmission optique selon l'invnetion.

L'invention propose de régénérer séparément sur la liaison les signaux aux différentes longueurs d'onde du peigne ou multiplex. Une telle régénération séparée pour chacune des longueurs d'onde permet de limiter le nombre d'amplificateurs de la liaison. Elle permet aussi de simplifier la structure de chaque répéteur.

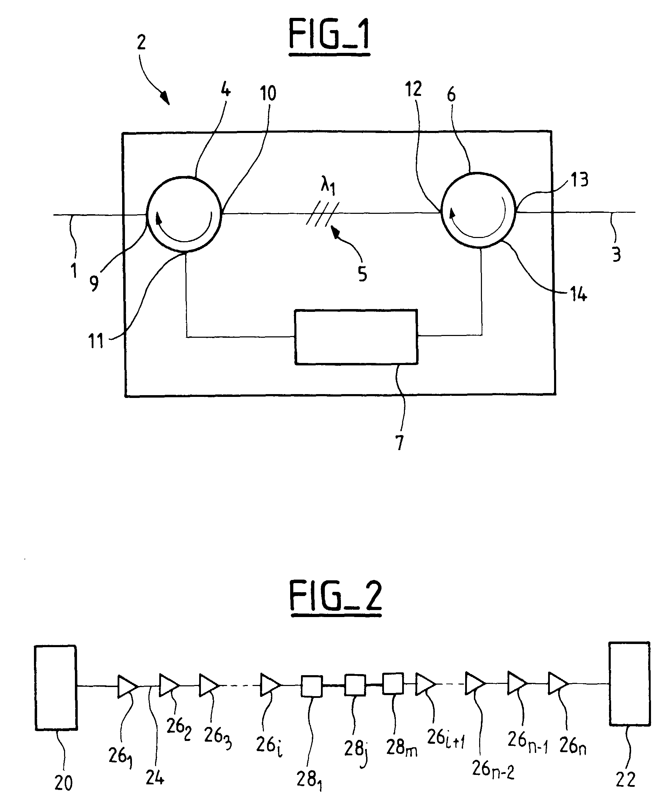

Pour cela, l'invention propose un répéteur permettant de séparer ou isoler une longueur d'onde et de procéder à sa régénération. La figure 1 montre une représentation schématique d'un répéteur selon l'invention . On a représenté sur la figure la fibre de ligne 1 par laquelle les signaux du multiplex arrivent au répéteur 2, et la fibre de ligne 3 sur laquelle le répéteur transmet les signaux régénérés.

Le répéteur comprend des moyens de séparation d'une longueur d'onde du multiplex des autres longueurs d'ondes, et des moyens de régénération des signaux à cette longueur d'onde. Il comprend aussi des moyens de combinaison des signaux régénérés à ladite longueur d'onde et des signaux des autres longueurs d'onde.

Dans le mode de réalisation de la figure 1, le répéteur comprend un premier circulateur 4 à trois entrées, un filtre 5, un deuxième circulateur à trois entrées 6, et un régénérateur 7. Sur une entrée 9 du premier circulateur 4 arrivent les signaux provenant de la fibre de ligne 1. Une deuxième entrée 10 de ce circulateur est reliée par une fibre à une première entrée 12 du deuxième circulateur 6, en passant par le filtre 5. La troisième entrée 1 1 du premier circulateur est reliée par une fibre à la troisième entrée 14 du deuxième circulateur 6, en passant par le régénérateur 7. La fibre de ligne 3 de sortie est reliée à la deuxième entrée 13 du deuxième circulateur 6.

Le filtre 5 laisse réfléchit les signaux à une longueur d'onde du multiplex - sur la figure les signaux à λ₁, et laisse passer les signaux aux autres longueurs d'onde. Le filtre est par exemple un filtre de Bragg. Le régénérateur est susceptible de régénérer les signaux à la longueur d'onde λ₁, et peut être un régénérateur de tout type, par exemple un régénérateur opto-électronique connu en soi, ou encore un régénérateur optique. Le régénérateur peut être susceptible de régénérer chacune des longueurs d'onde du multiplex, de sorte à pouvoir utiliser le même régénérateur dans les répéteurs selon l'invention destinés à régénérer les différentes longueurs d'onde.

Le fonctionnement du répéteur de la figure 1 est le suivant. Les signaux aux différentes longueurs d'onde du multiplex arrivent par la fibre de ligne 1 sur la première entrée 9 du premier circulateur 4, et sont transmis vers la deuxième entrée 10 de ce circulateur. En arrivant sur le filtre 5, les signaux à la longueur d'onde λ₁ sont réfléchis vers le premier circulateur 4, tandis que les signaux aux autres longueurs d'onde sont transmis vers le deuxième circulateur 6.

Les signaux aux autres longueurs d'onde arrivent sur la première entrée 12 du deuxième circulateur 6, et sont envoyés vers la deuxième entrée 13, et transmis sur la fibre de ligne 3.

Les signaux à la longueur d'onde λ₁ réfléchis par le filtre 5 reviennent vers la deuxième entrée 10 du circulateur et sont transmis vers la troisième entrée 1 1. De là, les signaux à λ₁ sont fournis au régénérateur 7, dans lequel ils sont régénérés. Les signaux régénérés à λ₁ sont ensuite envoyés vers la troisième entrée 14 du deuxième circulateur. Les signaux régénérés à λ₁ sortent du deuxième circulateur par la première entrée 12; ils sont réfléchis par le filtre 5 et reviennent vers la deuxième entrée 12 du deuxième circulateur; de là, ils passent sur la troisième entrée et sont envoyés sur la fibre de ligne 3, avec les signaux non régénérés aux longueurs d'onde autres que λ₁.

De la sorte, dans le mode de réalisation de la figure 1, les moyens de séparation des signaux à la longueur d'onde λ₁ du multiplex comprennent le premier circulateur 4 et le filtre 5; les moyens de combinaison des signaux non régénérés et des signaux régénérés comprennent le filtre 5 et le deuxième circulateur 6.

Le répéteur de la figure 1 permet ainsi la régénération des signaux sur une des longueurs d'onde du peigne. En outre, si le gain du régénérateur est adaptable, on peut régler la puissance de la longueur d'onde régénérée par rapport aux puissances des autres longueurs d'onde du multiplex.

L'invention propose d'utiliser des répéteurs de ce type pour régénérer les différentes longueurs d'onde du multiplex dans un système de transmission en WDM de longue portée. Les répéteurs pour chacune des longueurs d'onde du multiplex sont espacés entre eux le long du système de transmission, et par exemple sont disposés à intervalles régulier sur le deuxième tiers de la liaison ou au voisinage du milieu du système de transmission. Ils peuvent être intercalés entre les amplificateurs, ou être chacun associé à un amplificateur. On peut comme dans l'exemple ci-dessous régénérer une fois chacune des longueurs d'onde du multiplex ; dans ce cas, les répéteurs sont avantageusement au milieu de la liaison. On peut aussi régénérer chaque longueur d'onde du multiplex plusieurs fois ; les répéteurs régénérant une longueur d'onde donnée sont alors avantageusement répartis sur la liaison.

La figure 2 illustre un tel système de transmission optique conforme à l'invention. Il comprend un terminal émetteur 20, un terminal récepteur 22, une liaison à fibre optique 24, un ensemble d'amplificateurs 26ₖ (1 ≤ k ≤ n) et un ensemble de répéteurs 28ₚ (1 ≤ p ≤ m). A titre d'exemple, les répéteurs ont été placés sensiblement au milieu de la liaison optique 24.

Dans un mode de réalisation, l'invention a été appliquée à un système de transmission à fibre optique 8 x 2,5 Gbit/s, i. e. à un peigne de huit longueurs d'onde, avec un débit de 2,5 Gbit/s sur chaque canal ou longueur d'onde. Pour une puissance de sortie de + 9 dBm sans l'invention, pour une longueur totale de propagation de 9000 km, on obtient un rapport signal bruit de 7 dB/nm avec 160 amplificateurs; chaque amplificateur est un amplificateur à fibre dopée à l'erbium, connu en soi, qui présente un gain de 12 dB.

Les répéteurs de l'invention sont disposés, par exemple, à intervalles réguliers de 56,25 km sur la liaison, entre des distances z₁ =4275 km et z₈=4725 km. Chaque répéteur présente la structure décrite en référence à la figure 1, et utilise comme régénérateur un régénérateur opto-électronique de type connu en soi. Dans le cas représenté, les répéteurs sont chacun associés à un amplificateur et sont disposés les uns à la suite des autres. Avec le même nombre (160) d'amplificateurs, on atteint un rapport signal sur bruit de 10 dB/nm. Pour conserver un rapport signal à bruit de 7 dB/nm, on peut réduire à 120 le nombre d'amplificateurs.

L'invention permet de la sorte un gain significatif dans la portée de la liaison, ou une réduction sensible du nombre d'amplificateurs.

Bien entendu, la présente invention n'est pas limitée aux exemples et modes de réalisation décrits et représentés, mais elle est susceptible de nombreuses variantes accessibles à l'homme de l'art. L'invention a été décrite pour un système de transmission monodirectionnel; elle s'applique aussi à un système de transmission bidirectionnel. Elle s'applique à d'autres systèmes de transmission que le système à 8 x 2,65 Gbit/s donné à titre d'exemple. Dans le mode de réalisation de la figure 1, le filtre 5 est utilisé pour la séparation et la combinaison des signaux à la longueur d'onde λ₁ ; on pourrait utiliser des filtres différents, par exemples si l'on souhaite faire subir aux signaux aux autres longueurs d'onde un autre traitement, comme par exemple une amplification. On pourrait utiliser dans le montage de la figure un coupleur pour coupler les signaux régénérés à λ₁ et les signaux non régénérés aux autres longueurs d'onde.

Les moyens de séparation pourraient aussi comprendre d'autres composants que le circulateur et le filtre de la figure, comme par exemple des coupleurs et des filtres passant ou non autour de la longueur d'onde à régénérer.

## Revendications

1. Un répéteur pour un système de transmission à fibre optique à multiplexage en longueur d'onde, comprenant:
- des moyens (4, 5) de séparation des signaux à une longueur d'onde (λ₁) du multiplex des signaux aux autres longueurs d'ondes;
- des moyens (7) de régénération des signaux à ladite longueur d'onde (λ₁), et
- des moyens (5, 6) de combinaison des signaux régénérés à ladite longueur d'onde et des signaux non régénérés aux autres longueurs d'onde.

2. Le répéteur selon la revendication 1, caractérisé en ce que les moyens de séparation comprennent un circulateur (4) et un filtre (5) réfléchissant les signaux à la dite longueur d'onde.

3. Le répéteur selon la revendication 2, caractérisé en ce que le circulateur (4) présente une première entrée (9) recevant les signaux appliqués au répéteur, une deuxième entrée (10) reliée au filtre (5), et une troisième entrée (1 1) reliée aux moyens de régénération (7).

4. Le répéteur selon la revendication 1, 2 ou 3, caractérisé en ce que les moyens de combinaison comprennent un circulateur (6) et un filtre (5) réfléchissant les signaux à la dite longueur d'onde.

5. Le répéteur selon la revendication 4, caractérisé en ce que le circulateur (6) présente une première entrée (12) reliée au filtre (5), une deuxième entrée (13) fournissant les signaux de sortie du répéteur, et une troisième entrée (14) reliée aux moyens de régénération (7).

6. Le répéteur selon l'une des revendications 2 à 5, caractérisé en ce que le filtre (5) est un filtre de Bragg.

7. Le répéteur selon les revendications 3 et 5, caractérisé en ce que le circulateur (4) des moyens de séparation et le circulateur (6) des moyens de combinaison sont respectivement reliés à des bornes distinctes du filtre (5).

8. Un système de transmission à fibre optique à multiplexage en longueur d'onde, comprenant au moins un répéteur selon l'une des revendications 1 à 7.

9. Le système selon la revendication 8, caractérisé en ce qu'il comprend un répéteur pour la régénération séparée des signaux à chacune des longueurs d'onde du multiplex.

10. Le système selon la revendication 9, caractérisé en ce que les dits répéteurs sont régulièrement espacés entre eux.
